## Europäisches Patentamt
## European Patent Office
## Office européen des brevets

(11) Veröffentlichungsnummer: **0 123 672**
**A2**

# EUROPÄISCHE PATENTANMELDUNG

(21) Anmeldenummer: **84890071.8**

(22) Anmeldetag: **17.04.84**

(51) Int. Cl.³: **G 01 N 21/59**
**G 01 N 15/06**

(30) Priorität: **21.04.83 AT 1468/83**

(43) Veröffentlichungstag der Anmeldung:
**31.10.84 Patentblatt 84/44**

(84) Benannte Vertragsstaaten:
**DE FR GB IT**

(71) Anmelder: **AVL GESELLSCHAFT FÜR VERBRENNUNGSKRAFTMASCHINEN UND MESSTECHNIK MBH.PROF.DR.DR.H.C.HANS LIST**
**Kleiststrasse 48**
**A-8020 Graz(AT)**

(72) Erfinder: **Krempl, Peter W., Dr.**
**Stiftingtalstrasse 71/4/12**
**A-8010 Graz(AT)**

(72) Erfinder: **Schindler, Wolfgang, Dr.**
**Merangasse 19**
**A-8010 Graz(AT)**

(74) Vertreter: **Krause, Walter, Dr. Dipl.-Ing.**
**Margaretenstrasse 21**
**A-1040 Wien(AT)**

(54) Verfahren zur Bestimmung der Massen von absorbierenden Anteilen einer Probe und Vorrichtung zur Durchführung des Verfahrens.

(57) Ein Prüfvolumen (1) und ein Vergleichsvolumen (3) werden getrennt von einer Infrarotquelle (5) durchstrahlt und die beiden Strahlen (13, 11) danach in periodischer Aufeinanderfolge einem Detektor (6) zugeführt, dessen Zeitkonstante klein ist im Vergleich zur Periode dieser Umschaltung. Aus den festgestellten Intensitätsdifferenzen werden die Massen von absorbierenden Anteilen einer Probe im Prüfvolumen (1) ermittelt. Der Signalwert des Detektors (6) wird von einer Auswerteinheit (8) während jeder Periode zumindest je einmal während des Auftreffens des Prüf- und des Vergleichsstrahles abgefragt.

Zur getrennten Bestimmung von verschiedenen Anteilen der Probe wird während jeder Periode Strahlung von verschiedenen definierten Frequenzbändern dem Detektor (6) zugeführt, wobei die Intensität des Prüfstrahles (13) bei jeder der verschiedenen Frequenzen und die Intensität des Vergleichsstrahles (11) zumindest bei einer dieser Frequenzen ermittelt wird.

FIG.1

Verfahren zur Bestimmung der Massen von absorbierenden Anteilen einer Probe und Vorrichtung zur Durchführung
des Verfahrens

Die Erfindung betrifft ein Verfahren zur Bestimmung
der Massen von absorbierenden Anteilen einer Probe in
einem Prüfvolumen, wobei elektromagnetische Strahlung
im infraroten Spektralbereich sowohl das Prüfvolumen als
auch ein Vergleichsvolumen durchsetzt, der Prüfstrahl
sowie der Vergleichsstrahl in periodischer Aufeinanderfolge einem Detektor zugeführt und aus den Intensitätsdifferenzen die gesuchten Massen ermittelt werden und
wobei die Zeitkonstante des verwendeten Detektors um
mindestens eine Größenordnung kleiner als die Periode
der Umschaltung zwischen Prüfstrahl und Vergleichsstrahl
ist, sowie eine Vorrichtung zur Durchführung des Verfahrens.

Bei bekannten Verfahren zur Bestimmung der Massen
von Probenanteilen ist vorgesehen, eine Strahlung einer
Infrarotquelle in zwei Teilstrahlen aufzuteilen, welche
in periodischem Wechsel auf den gemeinsamen Detektor
treffen. Der eine Strahl durchsetzt dabei das Prüfvolumen mit der absorbierenden Substanz, deren Extinktion
zur Bestimmung des Massenanteils gemessen werden soll,
während der andere Strahl als Vergleichsstrahl dient.
Häufig wird dabei darauf geachtet, daß der Prüfstrahl
vor dem Durchlaufen des Prüfvolumens und der Vergleichsstrahl gleiche Intensität aufweisen und daß die Strahlen
gleiche optische Wege durchlaufen, was jedoch keine notwendige Bedingung für das Funktionieren des Verfahrens
darstellt.

Es sind auch Vorrichtungen zur Durchführung des
genannten Verfahrens bekannt, bei denen Detektoren verwendet werden, deren Ausgangssignal direkt der Intensitätsdifferenz der beiden Strahlen proportional ist, z.B.

pyroelektrische oder sogenannte Golay-Detektoren. Diese Vorrichtungen haben den Nachteil, daß die Beaufschlagung des Detektors mit dem Prüfstrahl und dem Vergleichsstrahl so zu erfolgen hat, daß zu keiner Zeit eine völlige Abdunkelung des Detektors oder eine Doppelbelichtung stattfindet, was beispielsweise durch mechanische Zerhackerscheiben nur bei sehr genauer Justierung gelingt und entsprechend störanfällig ist.

Weiters sind auch Detektoren bekannt, welche bei Bestrahlung mit infraroter Strahlung verhältnismäßig langsam, d.h. innerhalb einiger Millisekunden, ihr Ausgangssignal auf einen konstanten Wert einstellen, sodaß man nach der Einstellzeit ein der eintreffenden Strahlung proportionales Signal erhält. Als Beispiel seien hier nur die in Infrarotspektrometern häufig verwendeten Thermosäulen oder Thermoelemente genannt. Dunkelperioden oder Doppelbelichtungen eines derartigen Detektors sind nur von geringem Einfluß, soferne sie kurz im Vergleich zur vorgegebenen Periode der Messung sind. Absorptionen im Prozentbereich sind mit einer solchen Anordnung meßbar, soferne die Meßperiode nicht zu kurz dauert, d.h. soferne bei jeder Teilmessung der einzelnen Strahlen der konstante Endwert des Detektorsignals erreicht wird. Frequenzen über 20 Hz sind jedoch mit solchen Vorrichtungen praktisch nicht mehr meßbar, was Nachteile insbesonders im Zusammenhang mit der Auswertung von dynamischen Änderungen der absorbierenden Anteile einer Probe ergibt.

Weiters ist beispielsweise aus der DE-OS 24 22 174 ein Verfahren der eingangs genannten Art, bzw. eine zugehörige Vorrichtung bekannt, wobei dort bereits ein Detektor erwähnt wird, dessen Zeitkonstante um mindestens eine Größenordnung kleiner als die Periode der Umschaltung zwischen Prüfstrahl und Vergleichsstrahl ist. Damit sind prinzipiell bereits Messungen mit zeitlicher Auflösung unter 1/4 sec. möglich, wobei allerdings zufolge der Anordnung von mehreren gleichen Prüf-und Referenzküvetten mit je einem für unterschiedliche Frequenzen durchlässigen, fest hinter den Küvetten angebrachten Filter im Küvettenrad, insbesonders für die getrennte Bestimmung mehrerer unterschiedlicher Probenanteile eine sehr aufwendige und teure Konstruktion erforderlich ist.

Aufgabe der vorliegenden Erfindung ist es, die genannten Nachteile der bekannten Verfahren bzw. Vorrichtungen zu vermeiden und ein Verfahren der eingangs genannten Art sowie eine Vorrichtung zu dessen Durchführung anzugeben, welche nicht infolge von Dunkelperioden oder Doppelbelichtungen am Detektor fehlerhafte Werte liefern, die Messung von dynamischen Vorgängen mit hoher Zeitauflösung, also etwa 100 Hz und darüber, ermöglichen und die darüber hinaus noch einfach und kostengünstig sind.

Dies wird beim Verfahren gemäß der Erfindung dadurch erreicht, daß der momentane Signalwert des Detektors zumindest zweimal während einer Periode, nämlich zumindest je einmal zur Ermittlung der Intensität des Prüfstrahles sowie des Vergleichsstrahles, abgefragt wird, wobei die Abfragezeit kurz im Vergleich zur Periode ist und daß zur getrennten Bestimmung von zumindest zwei verschiedenen Anteilen der Probe während jeder Periode in bestimmter zeitlicher Aufeinanderfolge von einer Strahlungsquelle Strahlung von zumindest zwei definierten Frequenzbändern ein und demselben Detektor zugeführt wird, wobei in jeder Periode die Intensität des Prüfstrahles bei jeder der definierten Frequenzen und die Intensität des Vergleichsstrahles bei zumindest einer dieser Frequenzen ermittelt wird. Durch die Verwendung eines schnellen Detektors mit kleiner Zeitkonstante ist eine sehr kurze Einlesezeit ermöglicht, wodurch nicht nur die negativen Auswirkungen von Fehlbelichtungen vermieden sondern auch innerhalb einer Meßperiode mehrere, z.B. frequenzselektierte Signalwerte, ermittelt und weiterverarbeitet werden können. Geeig-.

net sind beispielsweise Detektoren, welche aufgrund von Quanteneffekten im Detektormaterial ihre elektrischen Eigenschaften ändern, bzw. elektromotorische Kräfte entwickeln, die in jüngster Zeit bekannt geworden sind. Die Ansprechzeiten derartiger Detektoren auf Änderungen in der Strahlungsintensität liegen im Mikrosekundenbereich.

Im allgemeinen soll mit dem Verfahren nach der Erfindung die Absorption bei definierten Frequenzen untersucht werden, um die getrennte Bestimmung von zumindest zwei verschiedenen Anteilen der Probe zu ermöglichen. Um dies zu erreichen, wird also innerhalb einer Periode nacheinander die Strahlung der gewählten definierten Frequenzen dem gemeinsamen Detektor zugeführt, wobei für jede Frequenz der Signalwert des Prüfstrahles eingelesen wird und zumindest für eine dieser definierten Frequenzen der Signalwert des Vergleichsstrahles. Dies kann beispielsweise dadurch erreicht werden, daß eine Strahlungsquelle verwendet wird, die nacheinander die gewünschten definierten Frequenzen aussendet, oder dadurch, daß in die Strahlung einer breitbandig emittierenden Quelle frequenzselektierende Einheiten, z.B. Interferenzfilter, eingebracht werden. Das Signal des Detektors wird dann zu jenem Zeitpunkt in die Auswerte-Elektronik eingelesen, zu dem die volle Intensität der jeweils gewählten Frequenz auf den Detektor gelangt. Der Signalwert des Detektors wird dabei zwischen einem Minimalwert bei völliger Dunkelheit und einem Maximalwert bei Belichtung mit dem Vergleichsstrahl schwanken, wobei der Signalwert bei Belichtung mit dem Prüfstrahl nach Durchgang durch das Prüfvolumen im allgemeinen bei korrekter Einstellung der verwendeten Vorrichtung unterhalb des besagten Maximalwertes liegen wird. An sich wäre es nicht notwendig, den Minimalwert des Detektors in der Auswerte-Elektronik zu erfassen; diese könnte beispielsweise so justiert sein, daß ihr maximales Ausgangssignal einem Intensitätsverlust im Prüfvolumen von 0 % und ihr minimales Ausgangssignal einem Intensitätsverlust von beispielsweise 10 % entspricht, was in vorteilhafter Weise die Möglichkeit zur Auflösung von wesentlich geringeren Intensitätsverlusten ergibt, als dies der Fall wäre, wenn dem minimalen Ausgangssignal ein Intensitätsverlust von 100 % - also völlige Dunkelheit - zugeordnet würde.

Für verschiedene spektroskopische Anwendungen ist es jedoch vorteilhaft, wenn gemäß einer weiteren Ausgestaltung der Erfindung der momentane Signalwert des Detektors zusätzlich zu einem Zeitpunkt abgefragt wird, bei dem keine Strahlung zum Detektor gelangt. Dabei muß lediglich dafür Sorge getragen werden, daß der in der Auswerteeinheit üblicherweise vorgesehene Verstärker so eingestellt ist, daß der Minimalwert seines Ausgangssignals einen Intensitätsverlust von 100 % zuverlässig erfassen kann.

Obwohl das vorgeschlagene Verfahren im Prinzip für die Massenbestimmung jeder Substanz, die infrarote Strahlung absorbiert, verwendet werden kann, ist sie für die Messung von Aerosolteilchen im Abgas von Verbrennungsanlagen oder Verbrennungskraftmaschinen von besonderer Bedeutung. Bisher wurde zur Messung der Aerosolteilchenmenge die Extinktion von sichtbarem Licht verwendet; eine Methode, welche gute zeitliche Auflösung und hohe Empfindlichkeit auf Extinktionsänderungen garantiert. Diese Extinktion kann aber nicht mit der Aerosolteilchenmasse korreliert werden, da die Wellenlänge des Lichtes in der gleichen Größenordnung liegt wie die Teilchendurchmesser, im sogenannten optischen Mie-Bereich. In diesem Bereich ist die Zuordnung der Extinktion zur Masse nur bei genauer Kenntnis des Teilchendurchmessers möglich. Die Wellenlänge der infraroten Strahlung ist jedoch wesentlich größer als die Durchmesser der Teilchen aus Verbrennungsmaschinen, und in diesem sogenannten otpischen Rayleigh-Bereich ist die Extinktion der Teilchenmassenbeladung proportional. Die Anwendung des erfindungsgemäßen Verfahrens auf die Messung von Rauchgas stellt daher eine wesentliche Verbesserung der Abgasmeßtechnik dar.

In weiterer Ausgestaltung des Verfahrens nach der Erfindung ist vorgesehen, daß zur Messung der Massenemission graphithältiger Aerosolpartikeln aus Verbrennungsabgasen ein schmales Frequenzband mit Wellenlängen um 3,95 µm verwendet wird.

Bei diesen Infrarot-Frequenzen kann die Absorption als Maß für die Partikelbeladung von Abgas herangezogen werden und erlaubt darüberhinaus auch eine Bestimmung des praphitischen Anteils am Aerosol.

Gemäß einer besonders vorteilhaften Ausgestaltung der Erfindung ist vorgesehen, daß ein Absorber definierter Absorption mit einer Periode, welche ein ganzzahliges Vielfaches der Periode der Umschaltung vom Prüf- auf den Vergleichsstrahl ist, in den Strahlengang eingebracht wird. Damit ist eine besonders vorteilhafte Methode zur Kalibrierung der Meßwerte beim erfindungsgemäßen Verfahren gegeben. Da sich im Lauf von länger dauernden Messungen insbesondere die Quellstärke der verwendeten Strahlungsquelle verändern kann, ist es günstig, eine kontinuierliche Kalibrierung vorzunehmen, bei der etwa bei jeder n-ten Meßperiode (wobei n eine ganze Zahl größer oder vorteilhafterweise gleich 2 ist) ein Absorber mit definierter Absorption vorzugsweise in den Vergleichsstrahlengang eingeführt wird. Die Kalibrierung ist jedoch auch bei Einbringung des Absorbers in den Prüfstrahl möglich. Aus dem Unterschied der Detektorsignale mit und ohne Absorber im Vergleichsstrahl kann stets die Absorption im Prüfvolumen aus dem zugehörigen Detektorsignal berechnet werden. Die effektive Zeitauflösung des Verfahrens insgesamt wird durch diese kontinuierliche Kalibrierung allerdings geringfügig verringert, was aber üblicherweise nicht weiter ins Gewicht fällt.

Bei einer Vorrichtung zur Durchführung des Verfahrens, mit einer breitbandigen Strahlungsquelle die zumindest einen ein Prüfvolumen durchsetzenden Prüfstrahl und einen ein Vergleichsvolumen durchsetzenden Vergleichsstrahl im infraroten Spektralbereich abgibt, sowie mit einer Einrichtung zur abwechselnden Zuführung dieser beiden Strahlen zu einem gemeinsamen Detektor, der an eine Auswerteeinheit angeschlossen ist, ist gemäß einer besonders bevorzugten Ausbildung nach der vorliegenden Erfindung vorgesehen, daß die Einrichtung zur abwechselnden Zuführung von Prüf- und Vergleichsstrahl mindestens ein mechanisches Getriebe mit Auswahleinrichtungen, vorzugsweise, wie an sich beispielsweise aus der GB-PS 1 470 144 oder der DE-OS 25 57 508 bekannt, in Form einer rotierenden Scheibe mit Durchlaßöffnungen aufweist, und daß in den Durchlaßöffnungen der Auswahleinrichtung Frequenzfilter für Strahlung der definierten Frequenzbänder angeordnet sind. Das Detektorsignal wird dabei nur zu jenen Zeitpunkten von der Auswerteeinheit akzeptiert, zu denen Prüf- oder Vergleichsstrahl mit größter Intensität das jeweilige Frequenzfilter durchsetzen. Dies ergibt eine einfache und robuste Ausbildung der Vorrichtung, wobei infolge des sehr raschen Ansprechens des schnellen Detektors keine Fehler durch geringfügige Dejustierungen auftreten können. Durch entsprechende Markierungen, beispielsweise am Rand der die Frequenzfilter aufweisenden rotierenden Scheibe vorgesehene Marken, die mit berührungslosen Näherungsschaltern oder Lichtschranken zusammenarbeiten, kann eine eindeutige Bestimmung der Zeitpunkte, zu denen das jeweilige Frequenzfilter optimal im Strahlengang ist, durchgeführt werden.

Nach einer anderen Ausgestaltung der Erfindung kann die Einrichtung zur abwechselnden Zuführung von Prüf- und Vergleichsstrahl zumindest eine optoelektronisch abstimmbare frequenzselektive Einheit im Strahlengang zwischen Prüf- bzw. Vergleichsvolumen einerseits und Detektor andererseits enthalten. Das Detektorsignal wird dabei zu den Zeitpunkten von der Auswerteeinheit akzeptiert, bei welchen die optoelektronische Einheit eines der definierten Frequenzbänder aus dem Prüf- oder Vergleichsstrahl selektiert. Durch die Verwendung der an sich bekannten optoelektronisch abstimmbaren Frequenzfilter ergibt sich ein sehr einfacher Aufbau und ein zuverlässiges Funktionieren der Vorrichtung.

Gemäß einer anderen Ausgestaltung der Erfindung ist es jedoch auch möglich, daß als Strahlungsquelle eine periodisch auf die definierten Frequenzbänder abstimmbare Infrarotquelle verwendet ist, wobei das Detektorsignal von der Auswerteeinheit wiederum nur zu den Zeitpunkten akzeptiert wird, bei welchen die Strahlungsquelle eine der gewünschten Frequenzen emittiert. Auf diese Weise kann also auf die Einrichtung zur abwechselnden Zuführung von verschiedenen Frequenzen vor dem Detektor überhaupt verzichtet werden, da die Strahlungsquelle nur die jeweils gewünschten Frequenzen in der gewünschten periodischen Aufeinanderfolge liefert.

Der Detektor kann gemäß einer besonders vorteilhaften Ausgestaltung der Erfindung als einer der Widerstände in einer Brückenschaltung in der Auswerteeinheit ausgebildet sein, wobei ein zweiter Widerstand in dieser Schaltung einstellbar ist, sodaß die Ausgangsspannung zwischen zwei Punkten, der Brückenschaltung während eines Einstellvorganges auf einen definierten Wert, vorzugsweise Null, abgleichbar ist, wobei diese Ausgangsspannung entweder der minimalen oder der maximalen Belichtung des Detektors entspricht. Dies ist besonders vorteilhaft, wenn der Detektor ein sogenannter Fotowiderstand ist, da sich dadurch ein sehr einfacher Aufbau der Auswerteeinheit und eine sehr einfache Justierbarkeit der Anordnung ergibt. Die Brückenschaltung stellt eine sehr einfache und vorteilhafte Meßmethode für Widerstandsänderungen dar, im speziellen bei Belichtungsänderung des Fotowiderstandes. Am empfindlichsten wird die Messung von Widerstandsänderungen mit der Brückenschaltung, wenn ein zweiter Widerstand so eingestellt wird, daß in einer experimentellen Referenzsituation, in der vorliegenden Anordnung z.B. bei Maximalbelichtung (weniger günstig, obwohl auch möglich, bei vollständiger Dunkelheit - Nullbelichtung), die Ausgangsspannung der Brücke Null ist.

Die Erfindung wird im folgenden anhand der in der Zeichnung dargestellten Ausführungsbeispiele näher erläutert.

Fig. 1 zeigt in schematischer Darstellung ein Beispiel für eine Anordnung gemäß der Erfindung,

Fig. 2 das Detail II aus Fig. 1, die

Fig. 3 und 4 weitere Ausführungsbeispiele nach der Erfindung in einer der Fig. 1 entsprechenden Darstellung und

Fig. 5 schematisch eine vorteilhafte Ausgestaltung der Detektor- bzw. Auswerteeinheit.

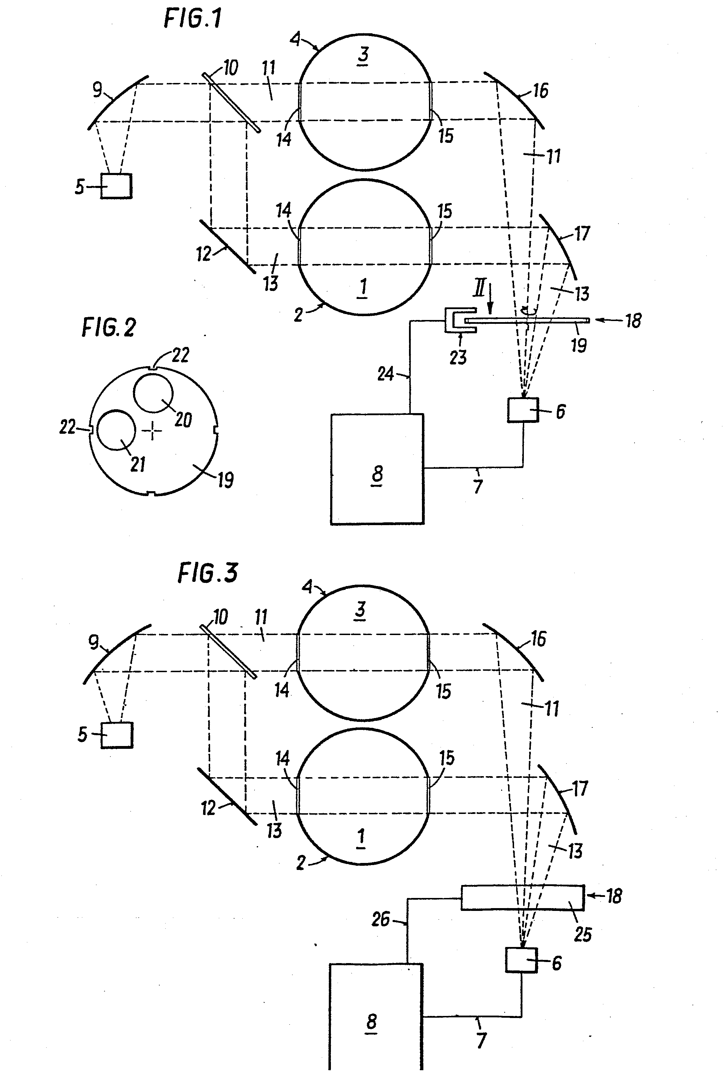

Die Anordnung nach Fig. 1 weist im wesentlichen eine das Prüfvolumen 1 umfassende Meßkammer 2, eine das Vergleichsvolumen 3 umfassende Vergleichskammer 4, eine zur Abgabe von elektromagnetischer Strahlung im infraroten Spektralbereich geeignete Strahlungsquelle 5 sowie einem Detektor 6 und eine über eine Leitung 7 angeschlossene Auswerteeinheit 8 auf.

Die Strahlungsquelle 5 gibt ein breitbandiges Spektrum infraroter Strahlung ab, welche über einen Spiegel 9 parallel gerichtet wird und in weiterer Folge auf einen halbdurchlässigen Spiegel 10 fällt. Hier wird die Strahlung aufgeteilt in einen durchgehenden Anteil, der als Vergleichsstrahl 11 der Vergleichskammer 4 zugeführt wird und in einen reflektierten Anteil, der nach nochmaliger Umlenkung an einem Spiegel 12 als Prüfstrahl 13 der Meßkammer 2 zugeführt wird.

Sowohl der Vergleichsstrahl 11 als auch der Prüfstrahl 13 tritt über Fenster 14 in die jeweilige Kammer 4 bzw. 2 ein und nach Durchsetzen derselben durch Fenster 15 aus dieser wieder aus, worauf er über Sammelspiegel 16, 17 dem gemeinsamen Detektor 6 zugeführt wird.

Im Strahlengang des Vergleichsstrahls 11 und des Prüfstrahls 13 ist zwischen den Sammelspiegeln 16 bzw. 17 und dem Detektor 6 eine Auswahleinrichtung 18 angeordnet, die im dargestellten Ausführungsbeispiel - wie auch aus Fig. 2 ersichtlich ist - im wesentlichen aus einer auf nicht dargestellte Art mechanisch angetriebenen rotierenden Scheibe 19 besteht. Die Scheibe 19 weist Durchlaßöffnungen 20, 21 auf, in welchen zwei verschiedene Frequenzfilter für den Durchlaß von Strahlung von zwei verschiedenen, definierten Frequenzbändern angeordnet sind. Diese Frequenzbänder können beispielsweise so gewählt sein, daß das in der Durchlaßöffnung 20 angeordnete Filter nur einen schmalen Wellenlängenbereich um 3,95 $\mu$m und das in der Durchlaßöffnung 21 angeordnete nur einen schmalen Wellenlängenbereich um 3,45 $\mu$m durchläßt, was beispielsweise für die Bestimmung der Partikelmasse aus Verbrennungsabgasen vorteilhaft ist.

Am äußeren Rand der Scheibe 19 sind mit den Durchlaßöffnungen 20, 21 korrelierte Markierungskerben 22 angebracht, welche mit einem berührungslosen Näherungsbzw. Durchgangsschalter 23, beispielsweise als Lichtschranke ausgeführt, zusammenarbeiten. Über eine Leitung 24 ist der Schalter 23 mit der Auswerteeinheit 8 verbunden, wobei im normalen Meßbetrieb die Auswerteeinheit 8 durch die über die Leitung 24 kommenden Markierungssignale derart beeinflußt wird, daß die über die Leitung 7 kommenden Signale vom Detektor 6 nur dann eingelesen bzw. akzeptiert werden, wenn die Markierungskerben 22 die maximale Übereinstimmung des jeweiligen Strahls 11 bzw. 13 mit einer der Durchlaßöffnungen 20 bzw. 21 und damit die maximal durchgelassene Intensität dieser Strahlen anzeigt.

Als Detektor 6 wird ein sogenannter schneller Detektor verwendet, dessen Zeitkonstante zumindest um eine Größenordnung kleiner ist als die Periodenfrequenz der durch die Auswahleinrichtung 18 erfolgenden Umschaltung zwischen Registrierung des Prüfstrahls 13 und des Vergleichsstrahls 11, wodurch die Abfrage des momentanen Signalwertes des Detektors 6 zumindest zweimal während einer Periode, nämlich zumindest je einmal zur Ermittlung der Intensität des Prüfstrahls sowie des Vergleichsstrahles, möglich ist. Die beispielsweise über die Breite der Markierungskerben 22 bestimmte Abfragezeit ist dabei kurz im Vergleich zur genannten Periode.

Zur Messung rasch ablaufender, dynamischer Vorgänge, die rasche Schwankungen der Massen der zu bestimmenden absorbierenden Anteile der Probe im Prüfvolumen 1 ergeben, ist die Scheibe 19 der Auswahleinrichtung 18 mit einer die gewünschte Zeitauflösung ermöglichenden Drehzahl anzutreiben, wobei dadurch bei jeder Umdrehung zuerst einer der beiden Strahlen 11, 13 nacheinander über die in den Durchlaßöffnungen 20 und 21 befindlichen Filter zum Detektor 6 gelangt und danach der zweite der beiden Strahlen. Zur Durchführung der Messungen prinzipiell erforderlich wäre aber lediglich eine einmalige Messung von Prüfstrahl und Vergleichsstrahl bei einer definierten Frequenz während jeder Periode. Auch wenn bei mehreren Frequenzen gemessen wird, ist es an sich nicht erforderlich, sowohl den Prüfstrahl als auch den Vergleichsstrahl bei allen diesen Frequenzen auf seine Intensität hin zu messen; es würde genügen, lediglich den Prüfstrahl 13 tatsächlich bei allen Frequenzen zu messen und den Vergleichsstrahl 11 nur bei einer dieser bestimmten definierten Frequenzen. Dies wäre in der dargestellten Anordnung beispielsweise dadurch möglich, daß für den Durchgang des Vergleichsstrahls 11 nur an einer Stelle der Scheibe 19 eine mit dem Schalter 23 zusammenarbeitende Markierungskerbe 22 vorgesehen wird. Abweichend von der dargestellten und besprochenen Anordnung der Auswahleinrichtung 18 könnte diese auch so ausgeführt sein, daß die Reihenfolge der Beaufschlagung des Detektors 6 nicht nach den Strahlen 11 bzw. 13 sondern nach den einzelnen zu messenden Frequenzbändern bestimmt wäre; in diesem Falle würde sich lediglich eine unterschiedliche Zuordnung der Meßsignale des Detektors selbst in der Auswerteeinheit 8 ergeben.

Aus der am Detektor 6 bestimmten Intensitätsdifferenz zwischen Prüfstrahl 13 und Vergleichsstrahl 11 werden in der Auswerteeinheit 8 die gesuchten Massen der jeweils bestimmten absorbierenden Anteile der Probe ermittelt, wobei die erhaltenen Meßwerte beispielsweise optisch angezeigt oder in geeigneter Form auf einem Datenträger ausgegeben werden.

Die Anordnung nach Fig. 3 unterscheidet sich von der nach Fig. 1 im wesentlichen nur dadurch, daß hier nun die Auswahleinrichtung 18 eine optoelektronisch abstimmbare Frequenzselektive Einheit 25 umfaßt, welche über eine Leitung 26 mit der Auswerteeinheit 9 in Verbindung steht und mit dieser so zusammenarbeitet, daß das Signal des Detektors 6 nur zu den Zeitpunkten von der Auswerteeinheit 8 akzeptiert wird, bei welchen die optoelektronische Einheit 25 eines der definierten Frequenzbänder aus dem Prüfstrahl 13 bzw. dem Vergleichsstrahl 11 selektiert.

Bezüglich der übrigen Merkmale und Vorteile der in Fig. 3 dargestellten Anordnung sei zur Vermeidung von Wiederholungen auf die Ausführungen zur Fig. 1 verwiesen; gleiche Teile sind mit gleichen Bezugszeichen versehen.

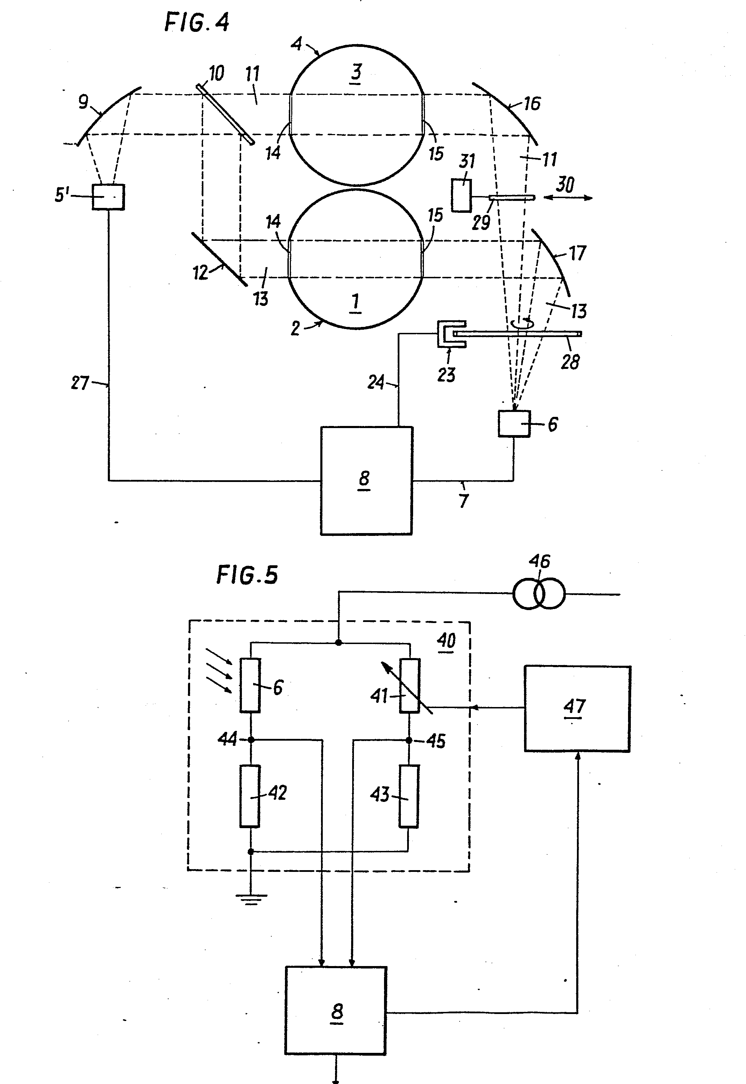

Die Anordnung gemäß Fig. 4 unterscheidet sich von den nach den Fig. 1 bis 3 im wesentlichen darin, daß hier als Strahlungsquelle eine Infrarotquelle 5' verwendet wird, die über eine Leitung 27 mit der Auswerteeinheit 8 in Verbindung steht und periodisch auf die gewünschten definierten Frequenzbänder abstimmbar ist. Damit entfällt also die frequenzselektive Auswahleinrichtung 18 der Ausführungsbeispiele nach den Fig. 1 bis 3; es ist hier lediglich eine Zerhackerscheibe 28 im Strahlengang des Vergleichsstrahls 11 bzw. Prüfstrahls 13 vor dem Detektor 6 angeordnet, welche diese beiden Strahlen 11, 13 abwechselnd zum Detektor 6 durchläßt. Auch hier ist wiederum ein Annäherungs- bzw. Durchgangsschalter 23 angeordnet, der über eine Leitung 24 mit der Auswerteeinheit 8 in Verbindung steht und die Zuordnung der am Detektor 6 jeweils festgestellten Intensität zum Prüf- bzw. Vergleichsstrahl ermöglicht.

Auch hier sei wiederum bezüglich der übrigen Merkmale und Vorteile auf die bereits besprochenen Ausführungen verwiesen; gleiche Teile sind auch hier wiederum mit gleichen Bezugszeichen versehen.

Zusätzlich wäre noch darauf hinzuweisen, daß - wie in Fig. 4 eingetragen - ein Absorber 29 definierter Absorption mit einer Periode, welche ein ganzzahliges Vielfaches der Periode der Umschaltung vom Prüf- auf den Vergleichsstrahl ist, in den Strahlengang des Vergleichsstrahls 11 eingebracht werden kann. Die Bewegung entlang des Pfeiles 30 erfolgt dabei über eine Betätigungseinrichtung 31, welche in nicht dargestellter Weise mit der Auswerteeinheit 8 in Verbindung steht bzw. von dieser beeinflußt wird. Damit kann eine kontinuierliche Kalibrierung der Anordnung vorgenommen werden, was insbesonders die Einflüsse einer schwankenden Quellstärke ausgleichen kann. Abweichend von der dargestellten Anordnung könnte der Absorber 29 jedoch auch im Strahlengang des Prüfstrahls 13 angeordnet sein.

Fig. 5 zeigt schematisch eine vorteilhafte Ausgestaltung der Detektor- bzw. Auswerteeinheit. Der Detektor 6 stellt einen von vier Widerständen in einer Brückenschaltung 40 dar. Der Widerstandswert von einem der anderen Widerstände 41, 42, 43 in Fig. 5 wurde 41 gewählt, ist einstellbar, die anderen beiden 42, 43 haben einen festen, geeigneten Wert. Die Brückenschaltung 40 wird von einer Konstantstromquelle 46 gespeist. Die Spannung zwischen zwei Punkten 44 und 45 der Brücke wird als Meßsignal der Auswerteeinheit 8 zugeführt. Eine Än-

derung der Leitfähigkeit des der Detektor 6 bildenden Fotowiderstandes bezüglich einer Referenzsituation kann besonders empfindlich nachgewiesen werden, wenn der variable Widerstand 41 derart eingestellt wird, daß das Meßsignal bei der Referenzsituation den Wert Null annimmt.

Im speziellen ist es zum Nachweis kleiner Absorptionen vorteilhaft, als Referenzsituation die maximale Detektorbelichtung (ohne Absorption) zu definieren. Die Größe der Absorption ist dann direkt mit der Spannung zwischen den Punkten 44 und 45 korreliert.

Die Justierung des variablen Widerstandes 41 kann dabei beim Einstellvorgang entweder manuell oder, wie in Fig. 5 angedeutet, durch elektronische oder elektromechanische Stellglieder 47, welche von der Auswerteeinheit 8 gesteuert werden, vorgenommen werden.

84 03 20
Pi/Fr

Patentansprüche

1. Verfahren zur Bestimmung der Massen von absorbierenden Anteilen einer Probe in einem Prüfvolumen, wobei
elektromagnetische Strahlung im infraroten Spektralbereich sowohl das Prüfvolumen als auch ein Vergleichsvolumen durchsetzt, der Prüfstrahl sowie der
Vergleichsstrahl in periodischer Aufeinanderfolge
einem Detektor zugeführt und aus den Intensitätsdifferenzen die gesuchten Massen ermittelt werden
und wobei die Zeitkonstante des verwendeten Detektors um mindestens eine Größenordnung kleiner als die
Periode der Umschaltung zwischen Prüfstrahl und Vergleichsstrahl ist, d a d u r c h  g e k e n n -
z e i c h n e t,  daß der momentane Signalwert des
Detektors (6) zumindest zweimal während einer Periode, nämlich zumindest je einmal zur Ermittlung der
Intensität des Prüfstrahles (13) sowie des Vergleichsstrahles (11), abgefragt wird, wobei die Abfragezeit
kurz im Vergleich zur Periode ist und daß zur getrennten Bestimmung von zumindest zwei verschiedenen
Anteilen der Probe während jeder Periode in bestimmter zeitlicher Aufeinanderfolge von einer Strahlungsquelle Strahlung von zumindest zwei definierten Frequenzbändern ein und demselben Detektor (6) zugeführt
wird, wobei in jeder Periode die Intensität des Prüfstrahls (13) bei jeder der definierten Frequenzen
und die Intensität des Vergleichsstrahles (11) bei zumindest einer dieser Frequenzen ermittelt wird.

2. Verfahren nach Anspruch 1, dadurch gekennzeichnet, daß der momentane Signalwert des Detektors (6) zusätzlich zu einem Zeitpunkt abgefragt wird, bei dem keine Strahlung zum Detektor (6) gelangt.

3. Verfahren nach Anspruch 1 oder 2, dadurch gekennzeichnet, daß ein Absorber (29) definierter Absorption mit einer Periode, welche ein ganzzahliges Vielfaches der Periode der Umschaltung vom Prüf- auf den Vergleichsstrahl (13, 11) ist, in den Strahlengang eingebracht wird.

4. Verfahren nach einem der Ansprüche 1 bis 3, dadurch gekennzeichnet, daß zur Messung der Massenemission graphithältiger Aerosolpartikeln aus Verbrennungsabgasen ein schmales Frequenzband mit Wellenlängen um 3,95 μm verwendet wird.

5. Vorrichtung zur Durchführung des Verfahrens nach einem der Ansprüche 1 bis 4, mit einer breitbandigen Strahlungsquelle, die zumindest einen ein Prüfvolumen durchsetzenden Prüfstrahl und einen ein Vergleichsvolumen durchsetzenden Vergleichsstrahl im infraroten Spektralbereich abgibt, sowie einer Einrichtung zur abwechselnden Zuführung dieser beiden Strahlen zu einem gemeinsamen Detektor, der an eine Auswerteeinheit angeschlossen ist, dadurch gekennzeichnet, daß die Einrichtung zur abwechselnden Zuführung von Prüf- und Vergleichsstrahl (13, 11) mindestens ein mechanisches Getriebe mit Auswahleinrichtungen (18), vorzugsweise, wie an sich bekannt, in Form einer rotierenden Scheibe (19) mit Durchlaßöffnungen (20, 21) aufweist, und daß in den Durchlaßöffnungen (20, 21) der Auswahleinrichtung (18) Frequenzfilter für Strahlung der definierten Frequenzbänder angeordnet sind.

6. Vorrichtung zur Durchführung des Verfahrens nach einem der Ansprüche 1 bis 4, mit einer breitbandigen Strahlungsquelle, die zumindest einen ein Prüfvolumen durchsetzenden Prüfstrahl und einen ein Vergleichsvolumen durchsetzenden Vergleichsstrahl im infraroten Spektralbereich abgibt, sowie einer Einrichtung zur abwechselnden Zuführung dieser beiden Strahlen zu einem gemeinsamen Detektor, der an eine Auswerteeinheit angeschlossen ist, dadurch gekennzeichnet, daß die Einrichtung zur abwechselnden Zuführung von Prüf- und Vergleichsstrahl (13, 11) zumindest eine optoelektronisch abstimmbare freqzenzselektive Einheit (25) im Strahlengang zwischen Prüf- bzw. Vergleichsvolumen (1, 3) einerseits und Detektor (6) andererseits enthält.

7. Vorrichtung zur Durchführung des Verfahrens nach einem der Ansprüche 1 bis 4, mit einer Infrarot-Strahlungsquelle,die zumindest einen ein Prüfvolumen durchsetzenden Prüfstrahl und einen ein Vergleichsvolumen durchsetzenden Vergleichsstrahl abgibt, sowie einer Einrichtung zur abwechselnden Zuführung dieser beiden Strahlen zu einem gemeinsamen Detektor, der an eine Auswerteeinheit angeschlossen ist, dadurch gekennzeichnet, daß als Strahlungsquelle eine periodisch auf die definierten Frequenzbänder abstimmbare Infrarotquelle (5') verwendet ist.

8. Vorrichtung nach einem der Ansprüche 5 bis 7, dadurch gekennzeichnet, daß der Detektor (6) als einer der Widerstände in einer Brückenschaltung (40) in der Auswerteeinheit (8) ausgebildet und ein zweiter Widerstand (41) in dieser Schaltung (40) einstellbar ist, sodaß die Ausgangsspannung zwischen zwei Punkten (44, 45) der Brückenschaltung (40) während eines Einstellvorganges auf einen definierten Wert, vorzugsweise Null, abgleichbar ist, wobei diese Ausgangsspannung entweder der minimalen oder der maximalen Belichtung des Detektors (6) entspricht.

84 03 20
Pi/Fr

1/2

0123672

FIG.1

FIG.2

FIG.3

0123672

**FIG.4**

**FIG.5**